# EUROPÄISCHE PATENTSCHRIFT

(11) **EP 2 335 983 B1**
(45) Veröffentlichungstag und Bekanntmachung des Hinweises auf die Patenterteilung: **24.06.2015**
(21) Anmeldenummer: 10015698.3
(22) Anmeldetag: 15.12.2010
(51) Int. Cl.: B60R 19/34, F16F 7/00, F16F 7/12

(54) **Deformationselement für Fahrzeuge**
Deformation element for vehicles
Elément de déformation pour véhicules

(30) Priorität: 16.12.2009 DE 202009017016 U
(43) Veröffentlichungstag der Anmeldung: 22.06.2011
(73) Patentinhaber: Rehau AG + Co, 95111 Rehau (DE)
(72) Erfinder: Yildirim, Mustafa, 95145 Oberkotzau (DE)

(56) Entgegenhaltungen:
- EP-A2- 1 894 791
- EP-A2- 2 072 343
- GB-A- 2 319 581
- US-A- 4 336 868
- US-B1- 6 601 886

## Beschreibung

Die Erfindung betrifft ein Deformationselement für Fahrzeuge, insbesondere für Kraftfahrzeuge. Derartige Deformationselemente - oftmals auch als Crashboxen bezeichnet - dienen dazu, bei Unfällen die Bewegungsenergie der am Unfall beteiligten Fahrzeuge aufzunehmen und zu dissipieren. Daher hat die Wahl der Geometrie und des Materials des Deformationselementes einen erheblichen Einfluss auf den Verzögerungsverlauf über der Zeit im Fall eines Aufpralls eines Fahrzeuges auf ein Hindernis oder ein anderes Fahrzeug. In der Regel wird angestrebt, das Verzögerungselement in der Weise zu gestalten, dass ein möglichst gleichmäßiger Verzögerungsverlauf erreicht wird, um die Kraftwirkung auf Insassen eines an einem Unfall beteiligten Fahrzeuges möglichst zu begrenzen.

Nach dem Stand der Technik werden Deformationselemente beispielsweise mehrteilig aus Stahlelementen angefertigt, welche miteinander verschweißt werden. Daneben sind Deformationselemente bekannt, die aus thermoplastischen Composites hergestellt werden. Im letztgenannten Fall werden hierzu üblicherweise Fasermatten (Organobleche, Halbzeuge) unterschiedlicher Geometrie thermogeformt und miteinander verschweißt. Das Endprodukt ist ein komplettes Crash-Management System (CMS) inklusive Biegeträger und Crash-boxen. Beiden genannten Varianten ist gemeinsam, dass die Herstellung der Deformationselemente nach dem Stand der Technik vergleichsweise aufwendig ist. So ist in beiden Fällen ein Fügeprozess, nämlich ein Schweißvorgang, erforderlich. Energieabsorber aus faserverstärkten Kunststoffen sind beispielhaft aus der US 4,336,868 A bekannt.

Das gattungsbildende Dokument EP 1 894 791 A2 offenbart ein Deformationselement gemäß dem Oberbegriff des Anspruchs 1, wobei das Deformationselement aufgrund seiner konstruktiven Gestaltung nur bedingt an unterschiedliche Crashfälle anpassbar ist.

Ausgehend von dem genannten Stand der Technik stellt sich die Erfindung die Aufgabe, ein Deformationselement anzugeben, das leicht herzustellen ist und dabei vorteilhafte Eigenschaften im Hinblick auf sein Verhalten im Crashfall und seiner Wirtschaftlichkeit aufweist.

Diese Aufgabe wird durch das Deformationselement mit den in Anspruch 1 aufgeführten Merkmalen gelöst. Die Unteransprüche betreffen vorteilhafte Ausführungsformen und Varianten der Erfindung.

Das erfindungsgemäße Deformationselement ist unter Verwendung eines faserverstärkten Kunststoffs hergestellt. In der Kunststoffmatrix des erfindungsgemäßen Deformationselementes sind lose Fasern eingebettet. Diese losen Fasern können einer aufgeschmolzenen Kunststoffmasse untermischt und nachfolgend mit Hilfe eines Spritzgießverfahrens unmittelbar in das Formwerkzeug eingespritzt werden.

Die Fasern können dabei als sogenannte Kurzfasern eine Länge von 0-5mm, insbesondere von 0-1 mm aufweisen. Ebenfalls zur Anwendung kommen als Langfasern bezeichnete Fasern mit einer Länge von 5-50mm, insbesondere von 5-25mm. Ferner können die Fasern mit einem Volumenanteil von 10-60%, insbesondere von 30-60% vorliegen.

Die geometrische Gestaltung des erfindungsgemäßen Deformationselementes wird dadurch erreicht, dass es einen Außenhohlkörper und mindestens einen in dem Außenhohlkörper angeordneten Innenhohlkörper aufweist, wobei der Innenhohlkörper mit dem Außenhohlkörper über mindestens ein Verbindungselement verbunden ist. Dabei kann der Innenhohlkörper als ein insbesondere an seinen Stirnseiten offener kegelstumpfförmiger Körper gebildet sein. Diese Anordnung verleiht dem Deformationselement die erforderliche Steifigkeit und erlaubt es, durch die Wahl von Parametern wie Wandstärke, Material, Höhe und Öffnungswinkel des zugehörigen Kegels die gewünschten Crasheigenschaften des Deformationselementes in einem weiten Bereich einzustellen.

Die Ausgestaltung des erfindungsgemäßen Deformationselementes als Anordnung mit zwei Hohlkörpern hat darüber hinaus den Vorteil, dass weitere Komponenten eines zugehörigen Fahrzeuges, wie bspw. eine Verkabelung oder auch eine Abschleppöse durch das Deformationselement hindurch geführt werden können, wodurch der vorhandene Bauraum besser ausgenutzt werden kann.

Daneben hat die oben geschilderte Bauweise des Deformationselementes den Vorteil, dass es sich im Crashfall ohne übermäßige Blockbildung unter Aufnahme einer erheblichen Menge an Bewegungsenergie zusammenfaltet bzw. in sich zusammenfällt.

Der kegelstumpfförmige Körper kann dabei eine Wandstärke im Bereich von 0,7 - 3 mm, insbesondere im Bereich von 1 - 2 mm aufweisen.

Dadurch, dass es sich bei dem mindestens einen Verbindungselement um eine in Richtung der Längsachse des kegelstumpfförmigen Körpers verlaufende Rippe handelt, welche sich von der äußeren Mantelfläche des kegelstumpfförmigen Körpers zur Innenseite des Außenhohlkörpers erstreckt, kann eine mechanisch stabile Verbindung zwischen Innenhohlkörper und Außenhohlkörper erreicht werden.

Eine vorteilhafte Wahl für die Auslegung der Verbindung zwischen Innenhohlkörper und Außenhohlkörper besteht darin, dass 4 Rippen vorhanden sind.

Durch die vorteilhafte Maßnahme, dass das Deformationselement einstückig ausgebildet ist, kann eine einfache und kostengünstige Fertigung insbesondere als Spritzgussteil verwirklicht werden.

Als Fasern kommen bspw. Glas-, Natur-, Aramid- oder Kohlefasern in Frage, die als Kurz- oder Langfasern ausgebildet sein können.

Dadurch, dass es aus einem thermoplastischen oder duroplastischen Kunststoff hergestellt ist, wird erreicht, dass das Deformationselement einerseits mit geringem Gewicht ausgebildet werden kann und andererseits einer Fertigung durch das oben bereits erwähnte Spritzgießverfahren zugänglich wird. Daneben wird die Problematik der Korrosion, die sich regelmäßig bei den metallischen Deformationselementen nach dem Stand der Technik stellt, durch die Ausbildung des Deformationselementes aus Kunststoff umgangen. Insbesondere kann auf eine kostspielige kathodische Tauchlackierung verzichtet werden.

Zur Einstellung eines gewünschten Crashverhaltens des erfindungsgemäßen Deformationselementes weist der Innenhohlkörper Abstufungen mit Sollbruchstellen auf. Durch die konkrete konstruktive Gestaltung der Abstufungen lassen sich diejenigen Kraftverläufe, die das Deformationselement bei einer Verformung zeigt, praktisch beliebig einstellen.

Dadurch, dass an dem Außenhohlkörper ein U-förmiges Profil zur Aufnahme eines Frontmoduls eines Fahrzeuges angeformt ist, kann erreicht werden, dass das erfindungsgemäße Deformationselement auf einfache Weise in den vorderen Bereich eines Fahrzeuges integriert werden kann.

Das Deformationselement kann praktisch überall dort, wo Aufprallenergie dissipiert werden muss, vorteilhafte Anwendung finden. Insbesondere sind mögliche Anwendungen des erfindungsgemäßen Deformationselementes nicht auf den Fahrzeugbau beschränkt.

Nachfolgend wird die Erfindung anhand der Zeichnung näher erläutert. Es zeigen:
- Figur 1: eine perspektivische Darstellung eines Deformationselementes,
- Figur 2: eine Schnittdarstellung einer erfindungsgemäßen Gestaltung eines Innenhohlkörpers,
- Figur 3: eine Schnittdarstellung eines Deformationselementes in eingebautem Zustand,
- Figur 4: eine perspektivische Darstellung zweier erfindungsgemäßer Deformationselemente in eingebautem Zustand; und
- Figur 5: zur Verdeutlichung der Dimensionen einen Schnitt A und einen Schnitt B durch ein Deformationselement.

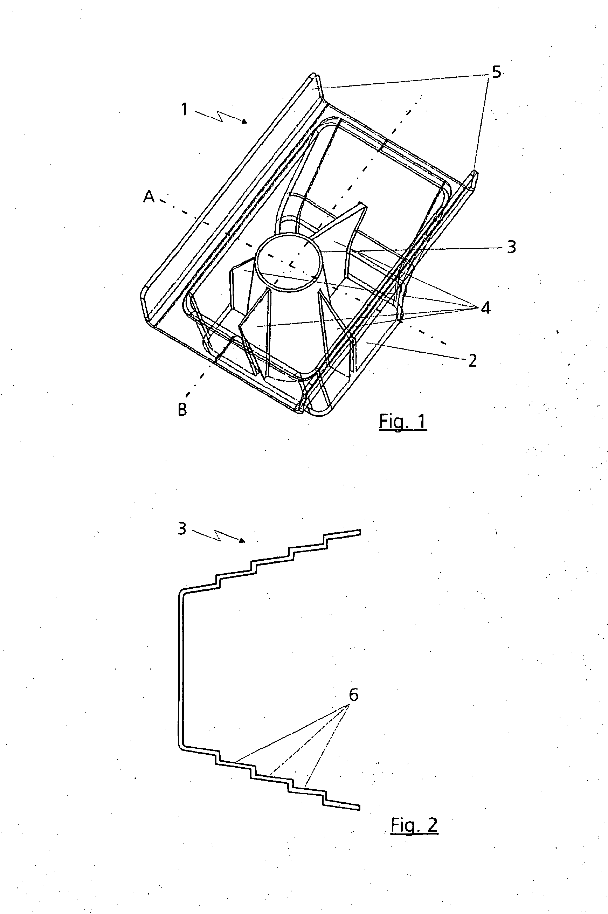

Figur 1 zeigt in einer perspektivischen Darstellung eine erste Ausführungsform des Deformationselements 1, welches in seiner prinzipiellen Gestaltungsform in Teilen aus dem Stand der Technik bekannt ist. In der dargestellten Ausführungsform ist in dem Außenhohlkörper 2 der konisch ausgebildete Innenhöhlkörper 3 angeordnet, wobei der Innenhohlkörper 3 über die vier Rippen 4 mit dem Außenhohlkörper 2 in Verbindung steht. Ebenfalls gut erkennbar in Figur 1 ist das U-förmige Profil 5, welches vorteilhaft dazu verwendet werden kann, das Deformationselement 1 mit einem nicht dargestellten Frontmodul eines Fahrzeugs zu verbinden.

Figur 2 zeigt in einer Querschnittsdarstellung eine erfindungsgemäße Gestaltung des Innenhohlkörpers 3. In der in Figur 2 gezeigten Version hat der Innenhohlkörper 3 - wie auch in Figur 1 - grundsätzlich einen kegelstumpfförmigen Querschnitt. Die Mantelfläche des Kegelstumpfs ist jedoch in eine Vielzahl von stufenförmigen Profilen 6 unterteilt, die Sollbruchstellen bilden und darüber hinaus eine leichte Verfaltbarkeit des Innenhohlkörpers 3 gewährleisten, wodurch eine Blockbildung im Crashfall verringert wird. In einer nicht näher dargestellten Ausführungsform kann das stufenförmige Profil 6 auch eine wellenförmige Struktur aufweisen.

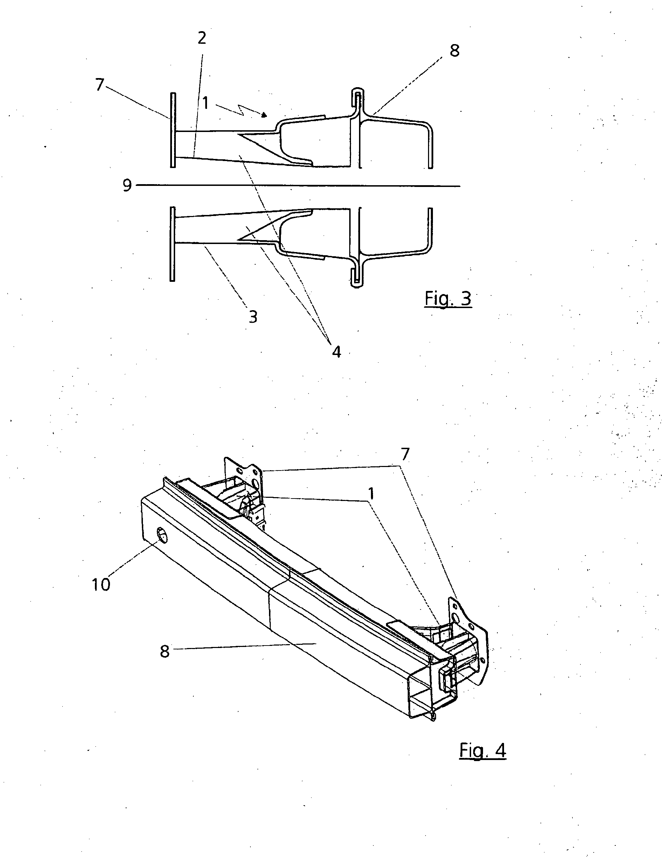

Figur 3 zeigt in einer Querschnittsdarstellung ein Deformationselement 1 im eingebauten Zustand. Das Deformationselement 1 ist dabei zwischen der Flanschplatte 7 und dem Frontmodul 8 angeordnet. Gut erkennbar wird, dass die geometrische Gestaltung des Deformationselementes 1 es gestattet, durch die Flanschplatte 7 sowie das Frontmodul 8 Komponenten hindurchzuführen, was durch die durchgezogene Linie 9 visualisiert wird. Insbesondere lässt sich durch den so geschaffenen Kanal eine Abschleppöse hindurchführen.

In einer nicht näher dargestellten Ausführungsform ist die Flanschplatte einstückig an das Deformationselement angeformt. Vorzugsweise ist das einstückig ausgebildete Deformationselement zusammen mit der Flanschplatte im Spritzgussverfahren hergestellt und als weiter vorzugsweise faserverstärktes Kunststoffbauteil ausgebildet. Dabei kann die einstückig ausgeformte Flanschplatte mit Metallinserts und/oder Metallbuchsen im Bereich der Verschraubungspunkte versehen sein.

Figur 4 zeigt eine perspektivische Darstellung zweier erfindungsgemäßer Deformationselemente 1 in eingebautem Zustand mit Frontmodul 8 und den Flanschplatten 7. Gut erkennbar im Frontmodul 8 ist die Durchführung 10 für eine nicht dargestellte Abschleppöse.

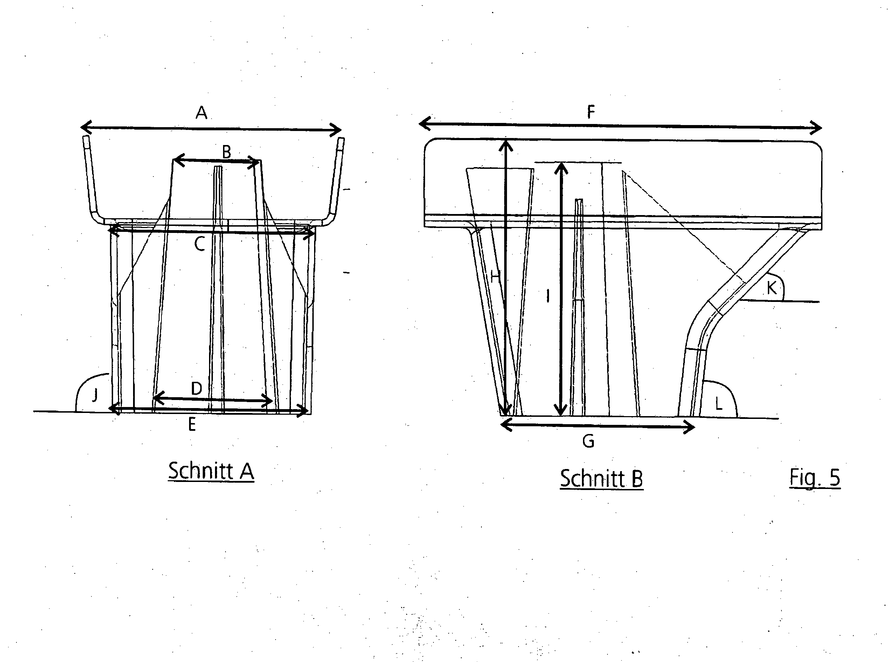

Figur 5 zeigt zur Verdeutlichung der Dimensionen eines Deformationselementes 1 zwei senkrecht aufeinander stehende Schnitte A und B (vgl. Fig. 1) durch das Deformationselement 1. Zugunsten der Übersichtlichkeit wurde in Figur 5 auf weitere Bezugszeichen verzichtet. Nachfolgend werden vorteilhafte Werte für die mit Doppelpfeilen bezeichneten Maße tabellarisch zusammengestellt:
A: 80 - 200 mm, insbesondere 104 mm
B: 5 - 50 mm, insbesondere 32 mm
C: 60 - 100 mm, insbesondere 81 mm
D: 40 -100 mm, insbesondere 46 mm
E: 60 - 200 mm, insbesondere 79 mm
F: 100 - 300 mm, insbesondere 158 mm
G: 60 - 200 mm, insbesondere 79 mm
H: 80 - 200 mm, insbesondere 102 mm
I: 60 - 180 mm, insbesondere 98 mm
J: 60° - 90°, insbesondere 80°
K: 30° - 60°, insbesondere 45°
L: 60° - 90°, insbesondere 84°

Die Wandstärke des Außenhohlkörpers 2 kann 2-3mm, insbesondere 2,5mm betragen, wohingegen die Rippen 4 und der Innenhohlköper 3 eine Wandstärke im Bereich von 0,7 - 3 mm, insbesondere 1 - 2 mm betragen kann.

## Patentansprüche

1. Deformationselement (1) für Fahrzeuge, wobei das Deformationselement (1) als Crashbox ausgebildet ist, das Deformationselement (1) einen Außenhohlkörper (2) und mindestens einen in dem Außenhohlkörper (2) angeordneten Innenhohlkörper (3) aufweist, wobei der Innenhohlkörper (3) mit dem Außenhohlkörper (2) über mindestens ein Verbindungselement (4) verbunden ist und der Innenhohlkörper (3) einen kegelstumpfförmigen Querschnitt aufweist, wobei das Deformationselement (1) einstückig als Spritzgussteil ausgebildet ist, welches unter Verwendung eines faserverstärkten Kunststoffs hergestellt ist, wobei in der Kunststoffmatrix lose Fasern eingebettet sind, **dadurch gekennzeichnet, dass** die Mantelfläche des Kegelstumpfs in eine Vielzahl von stufenförmigen oder wellenförmigen Profilen (6) unterteilt ist, die Sollbruchstellen bilden.

2. Deformationselement (1) nach Anspruch 1, **dadurch gekennzeichnet, dass** der mindestens eine Innenhohlkörper (3) als ein an seinen Stirnseiten offener kegelstumpfförmiger Körper gebildet ist.

3. Deformationselement (1) nach Anspruch 1 oder 2, **dadurch gekennzeichnet, dass** der kegelstumpfförmige Körper eine Wandstärke im Bereich von 0,7 - 3 mm, insbesondere im Bereich von 1 - 2 mm aufweist.

4. Deformationselement (1) nach einem der vorangehenden Ansprüche, **dadurch gekennzeichnet, dass** es sich bei dem mindestens einen Verbindungselement (4) um eine In Richtung der Längsachse des kegelstumpfförmigen Körpers verlaufende Rippe handelt, welche sich von der äußeren Mantelfläche des kegelstumpfförmigen Körpers zur Innenseite des Außenhohlkörpers (2) erstreckt.

5. Deformationselement (1) nach Anspruch 4, **dadurch gekennzeichnet, dass** wenigstens 2 Rippen, vorzugsweise 4 Rippen, weiter vorzugsweise 10 Rippen vorhanden sind.

6. Deformationselement (1) nach einem der vorangehenden Ansprüche, **dadurch gekennzeichnet, dass** es bspw. Glas-, Natur-, Aramid- oder Kohlefasern enthält.

7. Deformationselement (1) nach Anspruch 6, **dadurch gekennzeichnet, dass** es Kurz- oder Langfasern enthält.

8. Deformationselement (1) nach einem der vorangehenden Ansprüche **dadurch gekennzeichnet, dass** es aus einem thermoplastischen Kunststoff hergestellt ist.

9. Deformationselement (1) nach einem der vorangehenden Ansprüche, **dadurch gekennzeichnet, dass** an dem Außenhohlkörper (2) ein U-förmiges Profil (5) zur Aufnahme eines Frontmoduls eines Fahrzeuges angeformt ist.

## Claims

1. Deformation element (1) for vehicles, the deformation element (1) being designed as a crash box, the deformation element (1) having an outer hollow body (2) and at least one inner hollow body (3) arranged in the outer hollow body (2), the inner hollow body (3) being connected to the outer hollow body (2) by way of at least one connecting element (4) and the inner hollow body (3) having a frustoconical cross section, the deformation element (1) being formed in one piece as an injection-moulded part that is produced by using a fibre-reinforced plastic, and loose fibres being embedded in the polymer matrix, **characterized in that** the lateral surface of the truncated cone is divided into a multiplicity of step-shaped or wave-shaped profiles (6), which form predetermined breaking points.

2. Deformation element (1) according to Claim 1, **characterized in that** the at least one inner hollow body (3) is formed as a frustoconical body that is open at its end faces.

3. Deformation element (1) according to Claim 1 or 2, **characterized in that** the frustoconical body has a wall thickness in the range of 0.7 - 3 mm, in particular in the range of 1 - 2 mm.

4. Deformation element (1) according to one of the preceding claims, **characterized in that** the at least one connecting element (4) is a rib that runs in the direction of the longitudinal axis of the frustoconical body and extends from the outer lateral surface of the frustoconical body to the inner side of the outer hollow body (2).

5. Deformation element (1) according to Claim 4, **characterized in that** there are at least 2 ribs, preferably 4 ribs, more preferably 10 ribs.

6. Deformation element (1) according to one of the preceding claims, **characterized in that** it contains for example glass fibres, natural fibres, aramid fibres or carbon fibres.

7. Deformation element (1) according to Claim 6, **characterized in that** it contains short or long fibres.

8. Deformation element (1) according to one of the preceding claims, **characterized in that** it is produced from a thermoplastic material.

9. Deformation element (1) according to one of the preceding claims, **characterized in that** a U-shaped profile (5) for receiving a front module of a vehicle is moulded on the outer hollow body (2).

## Revendications

1. Elément de déformation (1) pour véhicules, l'élément de déformation (1) étant réalisé sous forme de boîte de collision, l'élément de déformation (1) présentant un corps creux extérieur (2) et au moins un corps creux intérieur (3) disposé dans le corps creux extérieur (2), le corps creux intérieur (3) étant connecté au corps creux extérieur (2) par le biais d'au moins un élément de connexion (4) et le corps creux intérieur (3) présentant une section transversale de forme tronconique, l'élément de déformation (1) étant réalisé d'une seule pièce sous forme de pièce moulée par injection, qui est fabriquée en utilisant un plastique renforcé par des fibres, des fibres lâches étant noyées dans la matrice de plastique, **caractérisé en ce que** la surface d'enveloppe du tronc de cône est divisée en une pluralité de profilés étagés ou ondulés (6), qui forment des points destinés à la rupture.

2. Elément de déformation (1) selon la revendication 1, **caractérisé en ce que** l'au moins un corps creux intérieur (3) est formé en tant que corps de forme tronconique ouvert au niveau de ses côtés frontaux.

3. Elément de déformation (1) selon la revendication 1 ou 2, **caractérisé en ce que** le corps de forme tronconique présente une épaisseur de paroi de l'ordre de 0,7 à 3 mm, en particulier de l'ordre de 1 à 2 mm.

4. Elément de déformation (1) selon l'une quelconque des revendications précédentes, **caractérisé en ce que** l'au moins un élément de connexion (4) est une nervure s'étendant dans la direction de l'axe longitudinal du corps de forme tronconique, qui s'étend de la surface d'enveloppe extérieure du corps de forme tronconique au côté intérieur du corps creux extérieur (2).

5. Elément de déformation (1) selon la revendication 4, **caractérisé en ce qu'**au moins 2 nervures, de préférence 4 nervures, plus préférablement 10 nervures sont prévues.

6. Elément de déformation (1) selon l'une quelconque des revendications précédentes, **caractérisé en ce qu'**il contient par exemple des fibres de verre, naturelles, d'aramide ou de carbone.

7. Elément de déformation (1) selon la revendication 6, **caractérisé en ce qu'**il contient des fibres courtes ou longues.

8. Elément de déformation (1) selon l'une quelconque des revendications précédentes, **caractérisé en ce qu'**il est fabriqué à partir d'un plastique thermoplastique.

9. Elément de déformation (1) selon l'une quelconque des revendications précédentes, **caractérisé en ce qu'**un profilé en forme de U (5) est façonné sur le corps creux extérieur (2) pour recevoir un module avant d'un véhicule.
